# EUROPÄISCHE PATENTSCHRIFT

(11) **EP 1 508 458 B1**
(45) Veröffentlichungstag und Bekanntmachung des Hinweises auf die Patenterteilung: **12.12.2007**
(21) Anmeldenummer: 04019346.8
(22) Anmeldetag: 14.08.2004
(51) Int. Cl.: B60C 23/04

(54) **Gehäuse für eine Radelektronik zum Anbringen an der Felge eines luftbereiften Rades unter dem Luftreifen**
Housing for a wheel electronic to be connected to a rim of a tire wheel below the tire
Boîtier pour électronique de roue à fixer sur la jante d'une roue à pneumatique sous le pneumatique

(30) Priorität: 18.08.2003 DE 10339016
(43) Veröffentlichungstag der Anmeldung: 23.02.2005
(73) Patentinhaber: Beru Aktiengesellschaft, 71636 Ludwigsburg (DE)
(72) Erfinder: Schulze, Gunter, 75228 Ispringen (DE); Gmünd, Patrick, 76437 Rastatt (DE); Nagore, Andreas, 75045 Walzbachtal (DE)
(74) Vertreter: Twelmeier Mommer & Partner

(56) Entgegenhaltungen:
- EP-A- 0 985 560
- EP-B- 0 751 017
- JP-A- 10 315 720
- JP-A- 2001 354 018

## Beschreibung

Die Erfindung geht aus von einem Gehäuse mit den Merkmalen des Oberbegriffs des Anspruchs 1 für eine Radelektronik zum Anbringen an der Felge eines luftbereiften Rades unter dem Luftreifen.

Unter einer "Radelektronik" wird hier eine Einrichtung zum Messen des Luftdrucks im Luftreifen und zum drahtlosen Übertragen des Messwertes verstanden. Unter der Gehäuseunterseite wird hier die in der Einbaulage des Gehäuses dem Felgenbett zugewandte Seite des Gehäuses verstanden.

Unter der Gehäuseoberseite wird die der Gehäuseunterseite gegenüberliegende, in der Einbaulage dem Felgenbett abgewandte Seite des Gehäuses verstanden.

Unter der Gehäusevorderseite und der Gehäuserückseite werden die beiden in der Einbaulage den Felgenhömem zugewandten Gehäuseseiten verstanden. Unter den Seitenteilen werden die in der Einbaulage sich in Richtung vom einen Felgenhorn zum gegenüberliegenden Felgenhorn erstreckenden Gehäuseseiten verstanden, welche die Gehäuseoberseite, die Gehäuseunterseite, die Gehäusevorderseite und die Gehäuserückseite miteinander verbinden.

Ein Gehäuse der eingangs genannten Art ist aus der EP 0 751 017 B1 bekannt. Das bekannte Gehäuse wird am Fußteil eines in die Felge eingesetzten Ventils befestigt und stützt sich mit zwei Füßen, welche an der Unterseite des Gehäuses vorgesehen sind, am Felgenbett ab, wenn das Gehäuse am Fußteil des Ventils befestigt ist und sich in seiner Einbaulage befindet.

Ein derartiges Gehäuse ist ferner aus der JP 2001 354018 A sowie der JP 10 315720 A bekannt. Das aus diesen Veröffentlichungen bekannte Gehäuse hat zur Aufnahme eines Spannbandes an seiner Oberseite eine längliche Ausnehmung, die sich in der Einbaulage in Umfangsrichtung der Felge erstreckt.

Da die Radelektronik den Luftdruck im Rad eines Kraftfahrzeuges messen soll, muss sie an der Felge montiert werden, bevor ein Gummireifen auf die Felge aufgezogen wird. Beim Montieren und beim Demontieren des Reifens muss einer der beiden Reifenwülste über das Gehäuse der Radelektronik hinwegbewegt werden. Bei unsachgemäßer Montage oder Demontage kann es vorkommen, dass der Reifen mit seiner Wulst, während diese über das Gehäuse hinwegbewegt wird, mit so großer Kraft auf das Gehäuse einwirkt, dass dieses beschädigt wird, zum Beispiel dadurch, dass eines seiner Füße abgeschert wird, mit welchen es sich auf dem Felgenbett abstützt. Wird die Beschädigung beim Montieren oder Demontieren erkannt, muss das Gehäuse mitsamt der darin untergebrachten Radelektronik sofort ersetzt werden. Ein Ersetzen des Gehäuses allein ist nicht möglich, weil der von der Radelektronik nicht beanspruchte Raum im Gehäuse aus Gründen der Betriebssicherheit im allgemeinen mit einer Vergussmasse angefüllt ist, zum Beispiel mit einem Silikonkunststoff. Wird eine Beschädigung des Gehäuses bei der Montage noch nicht entdeckt, dann ist während des Fahrbetriebes mit einem vorzeitigen Ausfall der Radelektronik zu rechnen, die dann zu ersetzen ist. Der Ersatz ist teuer. Ein Verzicht auf den Ersatz kommt nicht in Betracht, denn er würde die Fahrsicherheit beeinträchtigen.

Der vorliegenden Erfindung liegt die Aufgabe zugrunde, das Risiko, dass das Gehäuse der Radelektronik bei der Reifenmontage oder -demontage beschädigt wird, zu verringern.

Diese Aufgabe wird gelöst durch ein Gehäuse mit den im Anspruch 1 angegebenen Merkmalen. Vorteilhafte Weiterbildungen der Erfindung sind Gegenstand der Unteransprüche.

Bei dem erfindungsgemäßen Gehäuse haben die Seitenteile einen Vorsprung, welcher von der Gehäusevorderseite bis zur Gehäuserückseite über die Gehäuseoberseite nach oben vorsteht. Da sich das Rad drehen kann, wird die Angabe "nach oben" nicht auf die Richtung der Erdanziehung bezogen, sondern bezeichnet die Richtung von der Gehäuseunterseite zur Gehäuseoberseite und über diese hinaus. Die Erfindung verfolgt nicht das Ziel, das Einwirken einer Reifenwulst auf das Gehäuse der Radelektronik beim Montieren oder Demontieren eines Reifens zu verhindern, sondern nimmt es als gegeben hin, dass ein Reifen bei unsachgemäßer Montage mit einer seiner Reifenwülste auf das Gehäuse einwirken kann. Durch die erfindungsgemäße Maßnahme wird jedoch sichergestellt, dass trotz der Schwierigkeit, dass der Reifenmonteur bei seiner Arbeit das Gehäuse der Radelektronik nicht oder nur schwer im Blick hat, eine etwaige Einwirkung einer Reifenwulst auf das Gehäuse nicht unkontrolliert und zufallsbedingt an irgendeiner Stelle des Gehäuses erfolgt, sondern stets nur an dessen Seitenteilen.

Das hat den Vorteil, dass die Seitenteile die Kräfte, die durch die Reifenwulst von oben her auf sie ausgeübt werden, unmittelbar und auf kurzem Weg in das Felgenbett einleiten können. Dazu sollte die Höhe des Vorsprungs, nämlich das Maß, um welches der Vorsprung über die Gehäuseoberseite nach oben vorsteht, so gewählt werden, dass die Reifenwulst bei der Reifenmontage und -demontage die Wulst zwischen den Vorsprüngen nicht mit Druck oder Schub auf die Gehäuseoberseite einwirkt. Das soll auch dann gelten, wenn sich der Vorsprung der Seitenteile unter Verformung der Reifenwulst in diese eindrückt. Eine geeignete Bemessung der Höhe der Vorsprünge kann aus Erfahrungswerten gewonnen werden und beträgt zum Beispiel 2 mm.

Da die Reifenwülste einen kreisförmigen Verlauf haben, muß die Höhe des Vorsprungs auf den beiden Seitenteilen nicht groß sein, denn selbst wenn die Reifenwulst beim Herüberbewegen über das Gehäuse der Radelektronik gestreckt wird, wird sie nicht durchhängen. Zweckmäßigerweise wird die Höhe des Vorsprungs so bemessen, dass er sich unter den bei der Reifenmontage auftretenden Kräften nicht vollständig in die Reifenwulst eindrücken kann. Dadurch kann sichergestellt werden, dass die Kräfte, mit denen die Reifenwulst das Gehäuse bei der Reifenmontage belasten kann, im wesentlichen in die Seitenteile eingeleitet und durch diese auf kurzem Wege zur Gehäuseunterseite weitergeleitet werden. Von dort müssen die Kräfte in die Felge eingeleitet werden, was direkt oder indirekt geschehen kann. In beiden Fällen sollten die Seitenteile so ausgebildet sein, dass sie die Kräfte auf geradem Wege in die Felge oder in ein zwischen der Felge und der Gehäuseunterseite vorgesehenes und sich starr auf der Felge abstützendes Fußteil eingeleitet werden. Dadurch kann sichergestellt werden, dass die von den Seitenteilen aufgenommenen Kräfte die Gehäuseunterseite nicht auf Biegung beanspruchen. Deshalb hat jedes Seitenteil, welches sich, um eine möglichst unmittelbare Kraftübertragung zu erreichen, vorzugsweise geradlinig von der Gehäuseoberseite zur Gehäuseunterseite erstreckt, an seiner Unterseite wenigstens eine Auflegefläche, mit welcher die Seitenteile des Gehäuses entweder direkt an die Felge oder an ein zwischen der Felge und dem Gehäuse angeordnetes Fußteil angelegt werden können. Diese Auflegefläche erstreckt sich vorzugsweise von der Gehäusevorderseite bis zur Gehäuserückseite, um Kippmomente zu vermeiden, die sonst auftreten könnten, wenn eine Reifenwulst über das Gehäuse hinwegbewegt wird. Die Unterseite der Seitenteile kann aber auch in mehrere Auflegeflächen unterteilt sein, doch sollten diese dann so angeordnet sein, dass das Auftreten von Kippmomenten am Gehäuse und von Durchbiegungen am Seitenteil bestmöglich vermieden werden. So ist es durchaus möglich, an den vier unteren Ecken des Gehäuses Füße vorzusehen, an jedem Seitenteil zwei Füße, mit welchen sich das Gehäuse auf der Felge oder auf einem zwischen dem Gehäuse und der Felge angeordnetem Fußteil abstützen kann. Es versteht sich, dass der Querschnitt der Füße so zu bemessen ist, dass sie ohne Schaden zu nehmen der Belastung Stand halten können, die durch die Kräfte entsteht, die bei der Reifenmontage auf die Seitenteile ausgeübt werden. Vorzugsweise haben die Seitenteile eine gleichmäßige Dicke, damit die in den Seitenteilen verlaufende Kräfte in diesen keine vermeidbare Schwachstelle finden.

Vorzugsweise haben die Seitenteile eine gerundete Oberseite, welche vorzugsweise noch durch gerundete Schultern abgeschlossen wird. Das hat den Vorteil, dass beim Auftreffen einer Reifenwulst auf die Seitenteile Belastungsspitzen gemildert und dadurch sowohl das Gehäuse als auch die Reifenwulst geschont werden. Die gerundeten Seitenteile können sich in die Reifenwulst eindrücken, ohne diese zu verletzen, und die Reifenwulst kann mit mäßiger Reibung über die Seitenteile hinweggleiten. Der zwischen den Seitenteilen vorhandene Gehäuseabschnitt, welcher die empfindliche Radelektronik enthält, bleibt von den Kräften, die die Reifenwulst auf die Seitenteile ausübt, jedenfalls soweit verschont, dass Beschädigungen des Gehäuses und eine Beeinträchtigung der empfindlichen Radelektronik unterbleiben.

Vorzugsweise verlaufen die Seitenteile parallel zueinander. Das minimiert die Gefahr, dass eine auf den Seitenteilen gleitende Reifenwulst erhebliche Zugkräfte auf den Gehäuseabschnitt zwischen den beiden Seitenteilen ausübt.

Die Unterseite des Gehäuses einschließlich seiner Seitenteile kann eben ausgebildet sein. In diesem Fall empfiehlt es sich, im Hinblick auf die kreisförmige Kontur der Felge, zwischen der Felge und der Gehäuseunterseite ein starres Fußteil mit dazu passender ebener Oberseite anzuordnen, damit das Gehäuse bei der Reifenmontage nicht auf Biegung beansprucht werden kann. Soll sich das Gehäuse hingegen unmittelbar an der Felge abstützen, dann stehen die Seitenteile vorzugsweise über die Gehäuseunterseite nach unten vor, damit die bei der Reifenmontage auftretenden Kräfte nur über die Seitenteile des Gehäuses, nicht aber über den zwischen den Seitenteilen liegenden Abschnitt der Gehäuseunterseite in die Felge eingeleitet werden.

Zweckmäßigerweise sind die Seitenteile massiv ausgebildet, um auf einfache Weise eine ausreichende Tragfähigkeit zu erzielen. Die Wände des Gehäuses, welche zwischen den beiden Seitenteilen liegen, sind vorzugsweise dünner als die Seitenteile. Das ist möglich, weil die Belastungen, die von einer Reifenwulst ausgehen können, erfindungsgemäß von den Seitenteilen aufgenommen werden und nicht mehr von dem dazwischenliegendem Abschnitt des Gehäuses. Folglich kann das Gehäuse leichter sein als im Stand der Technik, was das Gehäuse nicht nur preiswerter macht, sondern auch die Unwucht vermindert, welche das Gehäuse mit der Radelektronik darin am Rad bewirkt.

Zweckmäßigerweise besteht das Gehäuse aus Kunststoff, welcher zur Erhöhung der Druckfestigkeit und Formbeständigkeit Füllstoffe enthalten kann. Als Kunststoffgehäuse wird es am einfachsten durch Spritzgießen hergestellt, vorzugsweise in einem Stück mit den Seitenteilen. Ebenso wie das bekannte Gehäuse benötigt das erfindungsgemäße Gehäuse eine Öffnung, durch welche die Radelektronik eingesetzt werden kann. Diese Öffnung kann durch einen Deckel verschlossen werden. Günstiger ist es, wie im Stand der Technik das Gehäuse nach dem Einsetzen der Radelektronik einer Vergußmasse auszugießen. Auf diese Weise läßt sich das Gehäuse - mit Ausnahme eines erforderlichen Zugangs für die Luft zum Drucksensor - leicht hermetisch verschließen und vor Feuchtigkeit und anderen schädlichen Einwirkungen schützen. Vorzugsweise liegt diese Öffnung des Gehäuses an der Gehäuseunterseite.

Anstatt die Seitenteile mit ihrem Vorsprung in einem Stück mit dem Gehäuse aus Kunststoff herzustellen, besteht auch die Möglichkeit, zur Bildung des Vorsprungs einen Bügel, zum Beispiel aus Metall, vorzusehen, welcher formschlüssig mit den Seitenteilen verbunden ist. Ein solcher Bügel kann im Verbund mit den im übrigen aus Kunststoff bestehenden Seitenteilen die Belastung, die eine Reifenwulst bei unsachgemäßer Reifenmontage auf das Gehäuse ausüben kann, besonders günstig aufnehmen und weiterleiten, und zwar auch dann, wenn der Kunststoff keine besondere Festigkeit haben sollte. Besonders geeignet sind Bügel mit zwei Schenkeln, die sich von der Gehäuseoberseite zur Gehäuseunterseite erstrecken und ganz oder teilweise in die Seitenteile eingebettet sind. Das kann dadurch geschehen, dass die Bügel vor dem Einspritzen des Kunststoffes in die Spritzgießform in diese eingelegt werden. Eine andere Möglichkeit besteht darin, an der Gehäusevorderseite und an der Gehäuserückseite an den beiden Seitenteile von oben nach unten verlaufende Nuten vorzusehen, in welchen die Schenkel der Bügel spielfrei liegen. In diesem Fall ist es nicht erforderlich, die Bügel als Einlegeteile in die Spritzgießform einzulegen, sie können vielmehr nachträglich auf das Gehäuse gesteckt werden.

Vorzugsweise sind die Schenkel der Bügel so lang, dass sie in Einbaulage über die Gehäuseunterseite nach unten vorstehen. Die Schenkel können dann eine weitere Aufgabe erfüllen, nämlich zur Befestigung des Gehäuses an der Felge oder an einem zwischen Gehäuse und Felge angeordneten Fußteil verwendet werden.

Ausführungsbeispiele der Erfindung sind schematisch in den beigefügten Zeichnungen dargestellt. Gleiche oder einander entsprechende Teile sind in den Beispielen mit übereinstimmenden Bezugszahlen bezeichnet.
- Figur 1: zeigt ein erfindungsgemäßes Gehäuse in einer Schrägansicht,
- Figur 2: zeigt das Gehäuse aus Figur 1 in einer Seitenansicht auf eines der beiden Seitenteile,
- Figur 3: zeigt das Gehäuse aus Figur 1 in einer Draufsicht,
- Figur 4: zeigt das Gehäuse in einer Vorderansicht in Einbaulage auf einem Felgenbett und unter Einwirkung einer Reifenwulst,
- Figur 5: zeigt in einer Darstellung entsprechend der Figur 2 ein erfindungsgemäßes Gehäuse, welches nicht unmittelbar, sondern unter Zwischenfügen eines Fußteils auf dem Felgenbett angeordnet ist,
- Figur 6: zeigt ein abgewandeltes Ausführungsbeispiel des Gehäuses in einer Vorderansicht,
- Figur 7: zeigt das Gehäuse aus Figur 6 in einer Draufsicht,
- Figur 8: zeigt das Gehäuse aus Figur 6 in einer Seitenansicht auf eines der Seitenteile,
- Figur 9: zeigt eine Abwandlung des Gehäuses aus Figur 1 in einer Ansicht wie in Figur 2, und
- Figur 10: zeigt das Gehäuse aus Figur 1 in einer Ansicht auf die Unterseite.

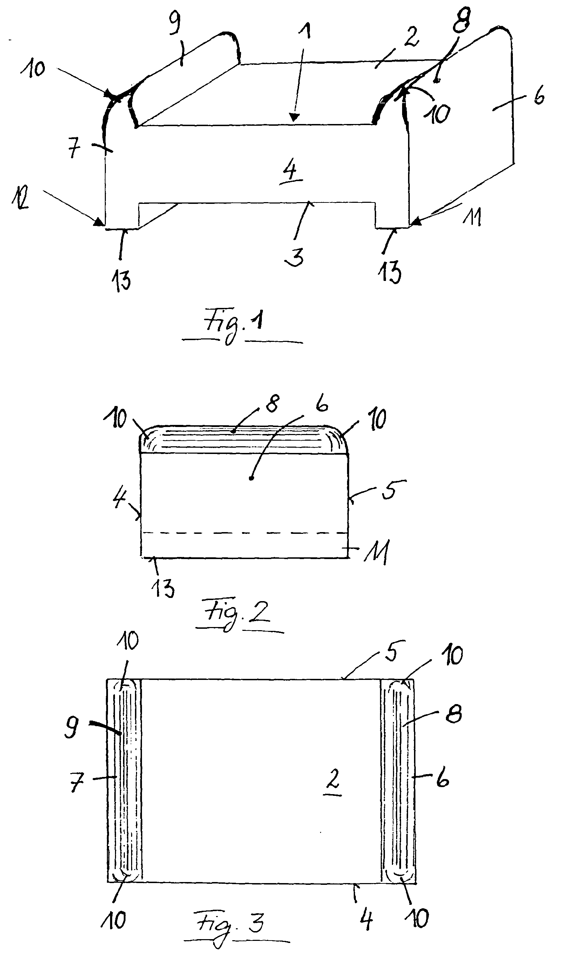

Das in den Figuren 1 bis 3 dargestellte Gehäuse 1 hat eine Gehäuseoberseite 2, eine Gehäuseunterseite 3, eine Gehäusevorderseite 4, eine Gehäuserückseite 5 und zwei massive Seitenteile 6 und 7. Die Seitenteile 6 und 7 stehen unter Bildung eines Vorsprungs 8, 9, welcher sich von der Vorderseite 4 bis zur Rückseite 5 erstreckt, über die Oberseite 2 vor. Die Vorsprünge 8 und 9 haben eine abgerundete Oberseite und enden in abgerundeten Schultern 10. Im übrigen erstrekken sich die Seitenteile 6 und 7 geradlinig von oben nach unten und von vorne nach hinten und verlaufen parallel zueinander. Sie stehen über die Unterseite 3 des Gehäuses vor und bilden je einen Fuß 11 bzw. 12, welcher sich von der Vorderseite 4 bis zur Rückseite 5 des Gehäuses erstreckt und eine einheitliche Auflegefläche 13 hat, mit welcher er sich, wie in Figur 4 dargestellt, in Einbaulage auf einem Felgenbett abstützt. Figur 4 zeigt außerdem, wie bei der Reifenmontage eine Reifenwulst 15 auf das Gehäuse 1 einwirken kann, wenn sie über das Gehäuse 1 hinwegbewegt wird. Wird die Reifenwulst 15 dabei nicht genügend angehoben, trifft sie auf die Vorsprünge 8 und 9 der Seitenteile 6 und 7, die sich dabei in die Reifenwulst 15 eindrücken können. Die dabei auf das Gehäuse 1 ausgeübte Kraft wird auf direktem Wege durch die Seitenteile 6 und 7 in das Felgenbett 14 eingeleitet, wie es durch die senkrechten Pfeile in Figur 4 angedeutet ist. Der zwischen den Seitenteilen 6 und 7 liegende Abschnitt 16 des Gehäuses 1, welcher die empfindliche Radelektronik enthält, bleibt von der Belastung verschont, welche von der Einwirkung der Reifenwulst 15 ausgeht. Die Radelektronik ist durch eine an der Gehäuseunterseite 3 vorgesehene Öffnung 21 (Figur 10) eingebaut und dann mit einer Vergußmasse 22, zum Beispiel mit einem Silikon, vergossen.

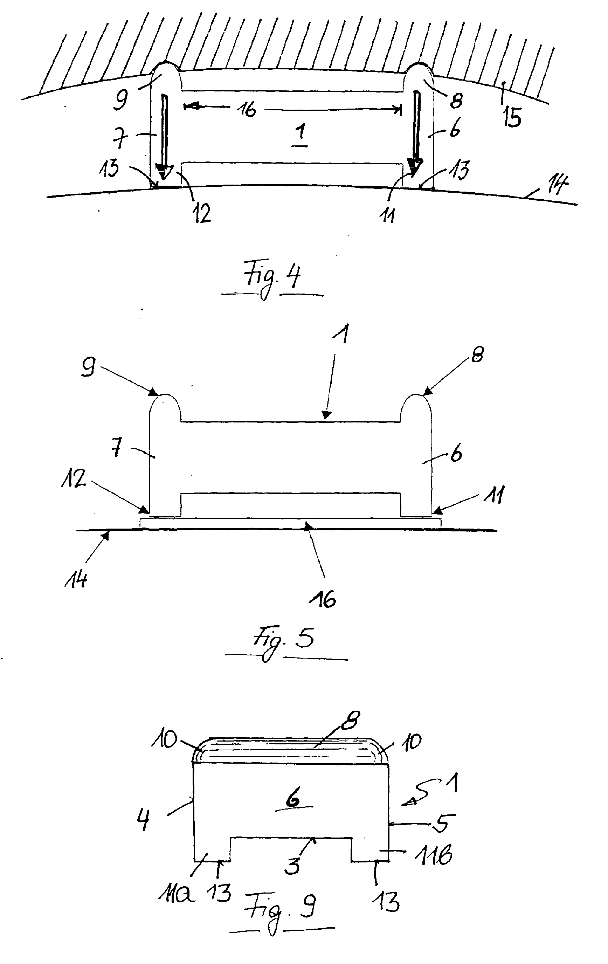

Das in Figur 5 dargestellte Ausführungsbeispiel unterscheidet sich von dem in Figur 4 dargestellten Ausführungsbeispiel darin, dass sich das Gehäuse 1 nicht direkt auf dem Felgenbett 14 abstützt. Vielmehr ist zwischen dem Gehäuse 1 und dem Felgenbett 14 ein Fußteil 16 angeordnet, welches einerseits mit der Felge verbunden ist, zum Beispiel durch Kleben, Punktschweißen, Nieten oder mittels eines Spannbandes und welches andererseits mit den Füßen 11 und 12 der Seitenteile 6 und 7 verbunden ist, zum Beispiel mittels einer formschlüssigen Rastverbindung zwischen den Füßen 11 und 12 und dem Fußteil 16.

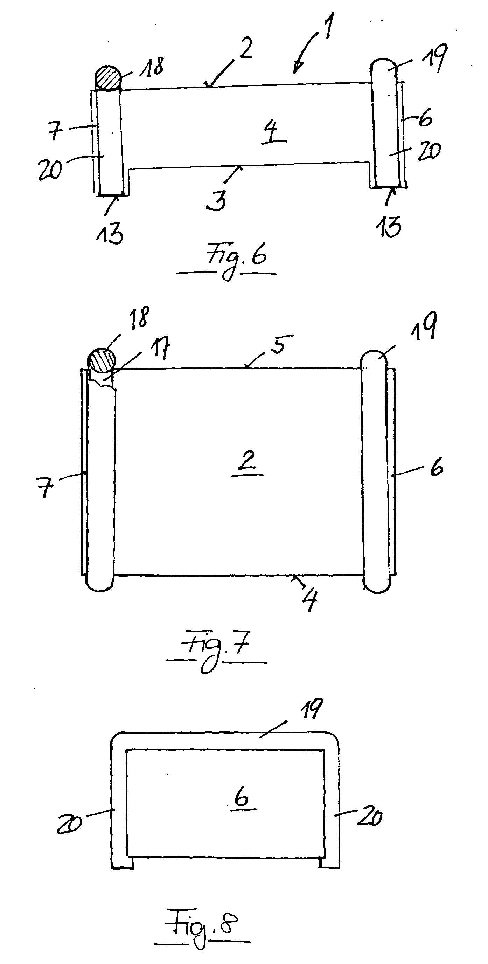

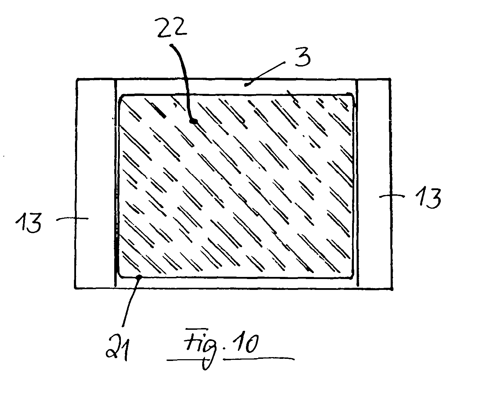

Bei dem in den Figuren 6 bis 8 dargestellten Ausführungsbeispiel stehen die Seitenteile 6 und 7 des Gehäuses nicht über dessen Oberseite 2 vor. Statt dessen haben die Seitenteile 6 und 7 auf der Vorderseite 4 und auf der Rückseite 5 des Gehäuses jeweils eine von oben nach unten verlaufende Nut oder Rille 17 mit einer im Querschnitt kreisbogenförmigen Kontur. Diese Nuten 17 nehmen spielfrei einen U-förmigen Bügel 18, 19 auf, welcher in den Figuren 6 und 7 teilweise auch im Schnitt dargestellt ist. Die Bügel 18, 19 bestehen aus Metall oder aus einem harten Kunststoff und stehen über die Oberseite 2, die Vorderseite 4 und die Rückseite 5 des Gehäuses vor. Die von oben nach unten verlaufenden Schenkel 20 der Bügelenden bündig mit der Auflegefläche 13 der Füße 11 und 12 (Figur 6) oder stehen über diese nach unten hin vor (Figur 8), was es möglich macht, die Bügel 18, 19 mit der Felge oder mit einem zwischen Felge und Gehäuse 1 angeordneten Fußteil zu verschweißen oder zu vernieten und auf diese Weise das Gehäuse 1 festzulegen.

Das in Figur 9 dargestellte Ausführungsbeispiel unterscheidet sich von dem in den Figuren 1 bis 4 dargestellten Ausführungsbeispiel darin, dass die Seitenteile 6 und 7 jeweils zwei Füße 11a, 11b haben, welche an den unteren Ecken des Gehäuses 1 angeordnet sind.

### Bezugszahlenliste:

- 1.: Gehäuse
- 2.: Gehäuseoberseite
- 3.: Gehäuseunterseite
- 4.: Gehäusevorderseite
- 5.: Gehäuserückseite
- 6.: Seitenteil
- 7.: Seitenteil
- 8.: Vorsprung
- 9.: Vorsprung
- 10.: Schulter
- 11.: Fuß
- 11a.: Fuß
- 11b.: Fuß
- 12.: Fuß
- 13.: Auflegefläche
- 14.: Felgenbett
- 15.: Reifenwulst
- 16.: Fußteil
- 17.: Nut (Rille)
- 18.: Bügel
- 19.: Bügel
- 20.: Schenkel
- 21.: Öffnung
- 22.: Vergußmasse

## Patentansprüche

1. Gehäuse für eine Radelektronik zum Anbringen an der Felge eines luftbereiften Rades in einer Einbaulage, mit einer Gehäuseoberseite (2), mit einer Gehäuseunterseite (3), mit einer diese verbindenden Gehäusevorderseite (4) und Gehäuserückseite (5) sowie mit zwei Seitenteilen (6,7), die sich in der Einbaulage des Gehäuses in Richtung von einem Felgenhorn zu einem gegenüberliegenden Felgenhorn erstrecken, **dadurch gekennzeichnet, dass** die Seitenteile (6,7), zur Aufnahme und Weiterleitung von Belastungen, einen Vorsprung (8, 9) haben, welcher von der Gehäusevorderseite (4) bis zur Gehäuserückseite (5) über die Gehäuseoberseite (2) nach oben vorsteht.

2. Gehäuse nach Anspruch 1, **dadurch gekennzeichnet, dass** sich die Seitenteile (6, 7) im wesentlichen geradlinig von der Gehäuseoberseite (2) zur Gehäuseunterseite (3) erstrecken.

3. Gehäuse nach Anspruch 1 oder 2, **dadurch gekennzeichnet, dass** jedes Seitenteil (6, 7) an seiner Unterseite wenigstens eine Auflegefläche (13) hat.

4. Gehäuse nach Anspruch 3, **dadurch gekennzeichnet, dass** sich die Auflegeflächen (13) von der Gehäusevorderseite (4) bis zur Gehäuserückseite (5) erstrecken.

5. Gehäuse nach einem der vorstehenden Ansprüche, **dadurch gekennzeichnet, dass** die Seitenteile (6, 7) eine gleichmäßige Dicke haben.

6. Gehäuse nach einem der vorstehenden Ansprüche, **dadurch gekennzeichnet, dass** die Seitenteile (6, 7) eine gerundete Oberseite haben.

7. Gehäuse nach einem der vorstehenden Ansprüche, **dadurch gekennzeichnet, dass** die Seitenteile (6, 7) gerundete Schultern (10) haben.

8. Gehäuse nach einem der vorstehenden Ansprüche, **dadurch gekennzeichnet, dass** die Seitenteile (6, 7) über die Gehäuseunterseite (3) nach unten vorstehen.

9. Gehäuse nach einem der vorstehenden Ansprüche, **dadurch gekennzeichnet, dass** die Seitenteile (6, 7) parallel zueinander verlaufen.

10. Gehäuse nach einem der vorstehenden Ansprüche, **dadurch gekennzeichnet, dass** die Seitenteile (6, 7) massiv ausgebildet sind.

11. Gehäuse nach einem der vorstehenden Ansprüche, **dadurch gekennzeichnet, dass** seine Wände, welche zwischen den beiden Seitenteilen (6, 7) liegen, dünner sind als die Seitenteile (6, 7).

12. Gehäuse nach einem der vorstehenden Ansprüchen, **dadurch gekennzeichnet, dass** es aus einem Kunststoff besteht.

13. Gehäuse nach Anspruch 12, **dadurch gekennzeichnet, dass** der Kunststoff Füllstoffe enthält.

14. Gehäuse nach einem der vorstehenden Ansprüche, **dadurch gekennzeichnet, dass** es durch Spritzgießen hergestellt ist.

15. Gehäuse nach einem der vorstehenden Ansprüche, **dadurch gekennzeichnet, dass** es aus einem Stück besteht.

16. Gehäuse nach einem der vorstehenden Ansprüche, **dadurch gekennzeichnet, dass** es eine Öffnung (21) hat, welche mittels einer Vergußmasse zu schließen ist.

17. Gehäuse nach einem der Ansprüche 1 bis 14 und 16, **dadurch gekennzeichnet, dass** der Vorsprung der Seitenteile (6, 7) durch einen Bügel (18, 19) gebildet ist, welcher formschlüssig mit den Seitenteilen (6, 7) verbunden ist.

18. Gehäuse nach Anspruch 17, **dadurch gekennzeichnet, dass** der Bügel mit zwei Schenkeln, die sich von der Gehäuseoberseite (2) zur Gehäuseunterseite (3) erstrecken, in die Seitenteile (6, 7) eingebettet ist.

19. Gehäuse nach Anspruch 17, **dadurch gekennzeichnet, dass** der Bügel (18, 19) mit zwei Schenkeln (20), welche sich von der Gehäuseoberseite (2) zur Gehäuseunterseite (3) erstrecken, in zwei Nuten (17) liegt, welche sich von oben nach unten an der Vorderseite (4) und Rückseite (5) des betreffenden Seitenteils (6, 7) erstrecken.

20. Gehäuse nach Anspruch 18 oder 19, **dadurch gekennzeichnet, dass** sich die Schenkel (20) des Bügels (18, 19) über die Unterseite der Seitenteile (6, 7) hinaus nach unten erstrecken.

21. Gehäuse nach einem der vorstehenden Ansprüche mit einer darin untergebrachten Radelektronik.

## Claims

1. Housing for a wheel electronic to be connected to a rim of a tire wheel in a mounting position, having a top (2), a bottom (3), a front (4) and a rear (5), the front (4) and rear (5) connecting the top (2) and the bottom (3), and two side parts (6, 7) that extend in a direction from one rim flange to an opposite rim flange in the mounting position of the housing, **characterized in that** the side parts (6, 7) have a projection (8, 9) for absorption and transmission of loads that projects in upward direction beyond the housing top (2) from the front (4) to the rear (5).

2. The housing as defined in Claim 1, **characterized in that** the side parts (6, 7) extend substantially linearly from the top (2) to the bottom (3) of the housing.

3. The housing as defined in Claim 1 or Claim 2, **characterized in that** each side part (6, 7) is provided with at least one supporting surface (13) on its bottom.

4. The housing as defined in Claim 3, **characterized in that** the supporting surfaces (13) extend from the front (4) to the rear (5) of the housing.

5. The housing as defined in any of the preceding Claims, **characterized in that** the side parts (6, 7) have a uniform thickness.

6. The housing as defined in any of the preceding Claims, **characterized in that** the side parts (6, 7) have a rounded upper surface.

7. The housing as defined in any of the preceding Claims, **characterized in that** the side parts (6, 7) have rounded shoulders (10).

8. The housing as defined in any of the preceding Claims, **characterized in that** the side parts (6, 7) project beyond the bottom (3) of the housing in downward direction.

9. The housing as defined in any of the preceding Claims, **characterized in that** the side parts (6, 7) extend in parallel one to the other.

10. The housing as defined in any of the preceding Claims, **characterized in that** the side parts (6, 7) are designed as solid elements.

11. The housing as defined in any of the preceding Claims, **characterized in that** the walls of the housing between the two side parts (6, 7) are thinner than the side parts (6, 7).

12. The housing as defined in any of the preceding Claims, **characterized in that** the housing is made from a plastic material.

13. The housing as defined in Claim 12, **characterized in that** the plastic material contains fillers.

14. The housing as defined in any of the preceding Claims, **characterized in that** the housing is produced by injection molding.

15. The housing as defined in any of the preceding Claims, **characterized in that** the housing is made as a single piece.

16. The housing as defined in any of the preceding Claims, **characterized in that** the housing is provided with an opening (21) that is to be closed by a casting compound.

17. The housing as defined in Claims 1 to 14 and 16, **characterized in that** the projection of the side parts (6, 7) is formed by a U-bolt that is connected with the side parts (6, 7) by a form fit.

18. The housing as defined in Claim 17, **characterized in that** two legs of the U-bolt, which extend from the top (2) to the bottom (3) of the housing, are embedded in the side parts (6, 7).

19. The housing as defined in Claim 17, **characterized in that** two legs (20) of the U-bolt, which extend from the top (2) to the bottom (3) of the housing, are fitted in two grooves (17) that extend from the top to the bottom in the front (4) and the rear (5) of the respective side plate (6, 7).

20. The housing as defined in Claim 18 or Claim 19, **characterized in that** the legs (20) of the U-bolt (18, 19) extend in downward direction beyond the bottom of the side parts (6, 7).

21. The housing as defined in any of the preceding Claims with a wheel electronic accommodated in the housing.

## Revendications

1. Boîtier pour une électronique de roue à appliquer contre la jante d'une roue équipée d'un bandage pneumatique dans une position de montage, comprenant un côté supérieur de boîtier (2), un côté inférieur de boîtier (3), un côté avant de boîtier (4) et un côté arrière de boîtier (5) reliant les premiers cités, ainsi que deux parties latérales (6, 7) qui s'étendent dans la position de montage du boîtier dans la direction allant d'un rebord de jante à un rebord de jante opposé, **caractérisé en ce que** les parties latérales (6, 7), pour la réception et le transfert de sollicitations, possèdent une protubérance (8, 9) qui fait saillie au-delà du côté supérieur de boîtier (2) depuis le côté avant de boîtier (4) jusqu'au côté arrière de boîtier (5).

2. Boîtier selon la revendication 1, **caractérisé en ce que** les parties latérales (6, 7) s'étendent essentiellement en direction rectiligne depuis le côté supérieur de boîtier (2) jusqu'au côté inférieur de boîtier (3).

3. Boîtier selon la revendication 1 ou 2, **caractérisé en ce que** chaque partie latérale (6, 7) possède, sur son côté inférieur, au moins une surface d'appui (13).

4. Boîtier selon la revendication 3, **caractérisé en ce que** les surfaces d'appui (13) s'étendent depuis le côté avant de boîtier (4) jusqu'au côté arrière de boîtier (5).

5. Boîtier selon l'une quelconque des revendications précédentes, **caractérisé en ce que** les parties latérales (6, 7) possèdent une épaisseur uniforme.

6. Boîtier selon l'une quelconque des revendications précédentes, **caractérisé en ce que** les parties latérales (6, 7) possèdent un côté supérieur arrondi.

7. Boîtier selon l'une quelconque des revendications précédentes, **caractérisé en ce que** les parties latérales (6, 7) possèdent des épaulements arrondis (10).

8. Boîtier selon l'une quelconque des revendications précédentes, **caractérisé en ce que** les parties latérales (6, 7) font saillie vers le bas au-delà du côté inférieur de boîtier (3).

9. Boîtier selon l'une quelconque des revendications précédentes, **caractérisé en ce que** les parties latérales (6, 7) s'étendent parallèlement l'une à l'autre.

10. Boîtier selon l'une quelconque des revendications précédentes, **caractérisé en ce que** les parties latérales (6, 7) sont pleines.

11. Boîtier selon l'une quelconque des revendications précédentes, **caractérisé en ce que** ses parois, qui sont disposées entre les deux parties latérales (6, 7), sont plus minces que les parties latérales (6, 7).

12. Boîtier selon l'une quelconque des revendications précédentes, **caractérisé en ce qu'**il est constitué d'une matière synthétique.

13. Boîtier selon l'une quelconque des revendications précédentes, **caractérisé en ce que** la matière synthétique contient des matières de charge.

14. Boîtier selon l'une quelconque des revendications précédentes, **caractérisé en ce qu'**il est fabriqué par moulage par injection.

15. Boîtier selon l'une quelconque des revendications précédentes, **caractérisé en ce qu'**il est constitué d'une seule pièce.

16. Boîtier selon l'une quelconque des revendications précédentes, **caractérisé en ce qu'**il possède une ouverture (21) qui doit être fermée avec une matière de scellement.

17. Boîtier selon l'une quelconque des revendications 1 à 14 et 16, **caractérisé en ce que** la protubérance des parties latérales (6, 7) est formée par un étrier (18, 19) qui est relié aux parties latérales (6, 7) par complémentarité de forme.

18. Boîtier selon la revendication 17, **caractérisé en ce que** l'étrier est encastré dans les parties latérales (6, 7) avec deux branches qui s'étendent depuis le côté supérieur de boîtier (2) jusqu'au côté inférieur de boîtier (3).

19. Boîtier selon la revendication 17, **caractérisé en ce que** l'étrier (18, 19) vient se disposer, avec deux branches (20) qui s'étendent depuis le côté supérieur de boîtier (2) jusqu'au côté inférieur de boîtier (3), dans deux rainures (17) qui s'étendent de haut en bas sur le côté avant (4) et sur le côté arrière (5) de la partie latérale correspondante (6,7).

20. Boîtier selon la revendication 18 ou 19, **caractérisé en ce que** les branches (20) de l'étrier (18, 19) s'étendent vers le bas au-delà du côté inférieur des parties latérales (6, 7).

21. Boîtier selon l'une quelconque des revendications précédentes, dans lequel est logée une électronique de roue.
